# EUROPÄISCHE PATENTSCHRIFT

(11) **EP 0 916 050 B1**
(45) Veröffentlichungstag und Bekanntmachung des Hinweises auf die Patenterteilung: **01.12.2004**
(21) Anmeldenummer: 98934873.5
(22) Anmeldetag: 08.06.1998
(51) Int. Cl.: F16K 31/06

(54) **DRUCKDICHTE BAUEINHEIT UND VERFAHREN ZU DEREN HERSTELLUNG**
PRESSURE-SEALED MODULAR UNIT AND METHOD FOR THE PRODUCTION THEREOF
GROUPE TENANT LA PRESSION ET SON PROCEDE DE PRODUCTION

(30) Priorität: 10.06.1997 DE 19724420
(43) Veröffentlichungstag der Anmeldung: 19.05.1999
(73) Patentinhaber: ROBERT BOSCH GMBH, 70442 Stuttgart (DE)
(72) Erfinder: MAYER-STEUERNAGEL, Wolfgang, D-90552 Röthenbach (DE); ROHAY, Lorand, D-90441 Nürnberg (DE)
(86) Internationale Anmeldenummer: PCT/DE1998/001555
(87) Internationale Veröffentlichungsnummer: WO 1998/057079

(56) Entgegenhaltungen:
- EP-A- 0 357 264
- EP-A- 0 726 583
- DE-A- 3 919 760
- DE-A- 19 521 510

## Beschreibung

### Stand der Technik

Die Erfindung geht aus von einem Verfahren zur Herstellung einer druckdichten Baueinheit, insbesondere einer Hydraulikeinheit nach der Gattung des Anspruchs 1.

Eine derartige Hydraulikeinheit ist beispielsweise aus der EP-A-0 357 264 und der DE 195 21 510 A1 bekannt, bei der ein Gehäuse aus einem thermoplastischen Kunststoff ausgeführt ist und im Gehäuse eine Ausnehmung ausgebildet ist, in die ein elektromagnetischer Steller eingesetzt ist. Der Steller weist ebenfalls ein Kunststoffgehäuseteil auf, das mit dem Gehäuse durch Schweißen oder Kleben druckdicht verbunden ist.

### Vorteile der Erfindung

Die Erfindung mit den kennzeichnenden Merkmalen des Anspruchs 1 hat den Vorteil, daß die druckdichte Verbindung durch Ultraschallschweißen herstellbar ist, wobei die zum Schweißen erforderliche Sonotrode nicht die Masse der Funktionseinheit, beispielsweise den Magneten eines elektromagnetischen Stellers, in Schwingung versetzen muß, sondern nur die wesentlich geringere Masse des Einsatzes. Darüberhinaus sind die Anforderungen an die Maßhaltigkeit des Gehäuses niedriger. Die Funktionseinheit kann im Gehäuse vormontiert, auf radiale und axiale Position gebracht und vor dem Schweißen auf Funktionsfähigkeit geprüft werden.

Vorteilhafte Weiterbildungen und Verbesserungen der erfindungsgemäßen Baueinheit sind durch die Maßnahmen der Unteransprüche möglich. Besonders vorteilhaft ist es, wenn der Deckel an die Funktionseinheit angeformt ist und die Anschlüsse für die Funktionseinheit im Deckel integriert sind. Zweckmäßig für eine Ultraschweißverbindung ist ferner, wenn der Einsatz an der zu verschweißenden Stirnseite mit zwei schneidenförmigen Auflagen ausgebildet ist, wobei die eine Schneide am Deckel und die andere Schneide am Gehäuse jeweils am Grund des Spaltes aufliegt. Dadurch wird gewährleistet, daß sich das beim Ultraschallschweißen verformende Material in den zwischen den Schneiden ausgebildeten Hohlraum einfließen kann. Eine weitere zweckmäßige Ausgestaltung des Spaltes und des Einsatzes, durch die ein von außen sichtbares Aufwerfen des beim Ultraschallschweißen fließenden Materials vermieden wird, ist dadurch möglich, daß der Einsatz einen breiteren äußeren Ring und einen am Grund des Spaltes aufsitzenden schmaleren Ring aufweist, wobei am schmaleren Ring die beiden Schneiden für die Ultraschallschweißverbindung ausgebildet sind.

### Zeichnung

Drei Ausführungsbeispiele der Erfindung sind in der Zeichnung dargestellt und in der nachfolgenden Beschreibung näher erläutert.

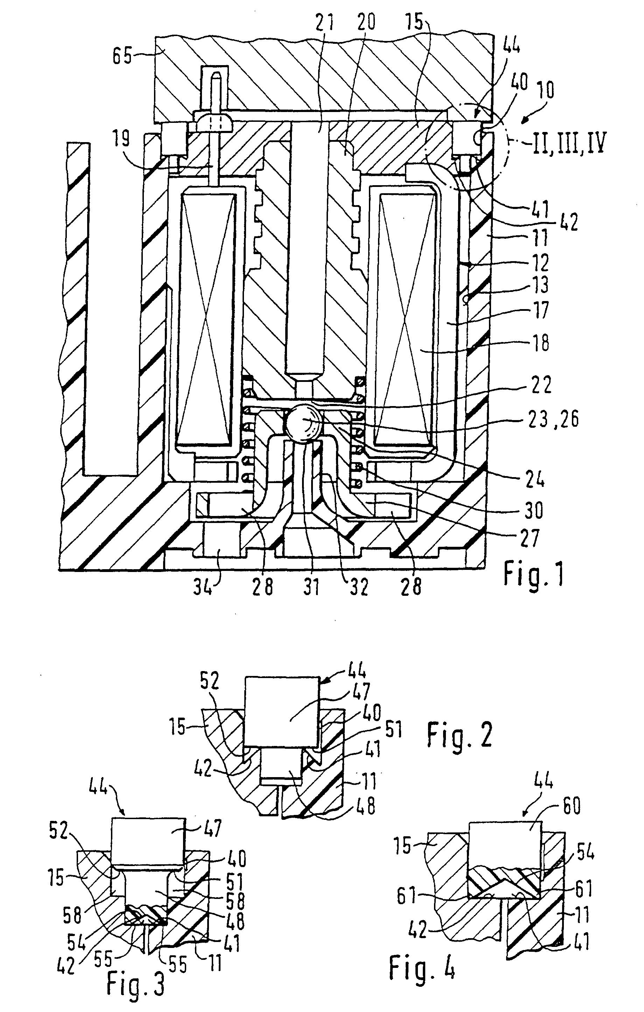

Es zeigen Figur 1 eine druckdichte Baueinheit im Längsschnitt mit einem ersten Ausführungsbeispiel einer druckdichten Verbindung, Figur 2 eine vergrößerte Darstellung der druckdichten Verbindung gemäß dem in Figur 1 dargestellten Ausführungsbeispiel, Figur 3 eine vergrößerte Darstellung der druckdichten Verbindung gemäß einem zweiten Ausführungsbeispiel und Figur 4 eine vergrößerte Darstellung der druckdichten Verbindung gemäß einem dritten Ausführungsbeispiel.

### Beschreibung der Ausführungsbeispiele

Figur 1 stellt eine Hydraulikeinheit 10 mit einem aus thermoplastischen Kunststoff bestehenden Gehäuse 11 sowie einen im Gehäuse druckdicht eingesetzten elektromagnetischen Steller 12 dar. Im Gehäuse 11 ist eine Ausnehmung 13 ausgeführt, in die der elektromagnetische Steller 12 eingesetzt ist. Zur Beschreibung der Wirkungsweise der Hydraulikeinheit 10 wird auf die DE-OS 195 21 510 verwiesen.

Der elektromagnetische Steller 12 weist eine deckelförmige Deckplatte 15, die ebenfalls aus einem thermoplastischen Kunststoff ausgeführt ist, sowie eine mit einem Spulenkörper 17 vergossene Magnetspule 18 auf, die mit elektrischen Anschlüssen 19 verbunden ist. In dem zu den Seiten hin offenen zylindrischen Innenraum des Spulenkörpers 17 ist ein Spulenkern 20 eingesetzt. Beim vorliegenden Ausführungsbeispiel wird die Deckplatte 15 von dem Vergußmaterial des Spulenkörpers 17 gebildet.

Der Spulenkern 20 ist mit einer zentrisch verlaufenden Längsbohrung 21 ausgeführt, die an einen nicht dargestellten Tank für ein Druckmittel angeschlossen ist. Am innerhalb des Spulenkörpers 17 liegenden Ende der Längsbohrung 21 ist ein tankseitiger Dichtsitz 22 ausgebildet. Der Dichtsitz 22 wirkt mit einem Schließelement 23 eines beweglichen Ankers 24 zusammen. Der hutförmig ausgebildete Anker 24 dringt mit seinem zylindrischen Teil durch den Spulenkörper 17. Eine in den Boden des hutförmigen Ankers eingepreßte Kugel 26 bildet das Schließelement 23 aus. Außerhalb des Spulenkörpers 17 weist der Anker 24 einen Flansch 27 auf, der von mehreren Durchlässen 28 durchdrungen wird. Am Flansch 27 liegt das eine Ende einer als Druckfeder ausgeführten Ankerfeder 30 an, die sich mit ihrem anderen Ende am ortsfesten Spulenkern 20 abstützt. Die Ankerfeder 30 drückt im stromlosen Zustand der Magnetspule 18 den Anker 24 gegen einen zulaufseitigen Dichtsitz 31, der vom Schließelement 23 abgedichtet wird. Der zulaufseitige Dichtsitz 31 ist an einem am Gehäuse 10 ausgebildeten rohrförmig Zulauffortsatz 32 angeordnet und liegt mit dem am Spulenkern 20 ausgebildeten Dichtsitz 22 in einer gemeinsamen Längsachse. Im Gehäuse 11 ist ferner ein weiterer Kanal 34 ausgebildet, der zu einem nicht dargestellten hydraulischen Verbraucher führt.

Zwischen Deckplatte 15 und Gehäuse 11 ist ein umlaufender, ringförmiger Spalt 40 mit einer gehäuseseitigen Grundfläche 41 und einer deckplattenseitigen Grundfläche 42 ausgebildet. Im Spalt 40 sitzt ein ringförmiger Einsatz 44, der mit seiner inneren Stirnfläche sowohl auf der gehäuseseitigen Grundfläche 41 als auch auf der deckplattenseitigen Grundfläche 42 aufliegt.

Auf dem ringförmigen Einsatz 44 sitzt eine Sonotrode 65 einer Ultraschallschweißanlage auf, die den ringförmigen Einsatz 44 in Schwingungen versetzt. Aufgrund der Ultraschallschwingungen kommt es im Bereich der Auflage zwischen der inneren Stirnfläche des ringförmigen Einsatzes 44 sowie der gehäuseseitigen Grundfläche 41 und der deckplattenseitigen Grundfläche 42 zu einem Schmelzen des thermoplastischen Kunststoff und somit zu einem Verschweißen von Deckplatte 15, Einsatz 44 und Gehäuse 11.

Eine vergrößerte Darstellung verschiedener Ausführungsbeispiele der Anordnung zur Herstellung der druckdichten Verbindung zeigen die Figuren 2, 3 und 4. Bei dem in Figur 2 dargestellten ersten Ausführungsbeispiel ist die gehäuseseitige Grundfläche 41 und die deckplattenseitige Grundfläche 42 schräg verlaufend ausgebildet, so daß sich an der Grundfläche 41 eine schneidenförmige, gehäuseseitige Auflage 45 und an der Grundfläche 42 eine schneidenförmige, deckplattenseitige Auflage 46 ausbilden. Der ringförmige Einsatz 44 weist einen oberen, breiten Ringabschnitt 47 und einen unteren, an beiden Seiten zurückgesetzten schmalen Ringabschnitt 48 auf. Zwischen den Ringabschnitten bildet sich eine äußere Ringfläche 51 und eine innere Ringfläche 52 aus. Der ringförmige Einsatz 44 liegt nun mit den Ringflächen 51, 52 auf der jeweiligen schneidenförmigen Auflage 45, 46 auf. Beim Einwirken des Ultraschalls auf den Einsatz 44 wird das Material des thermoplastischen Kunststoffs im Bereich der schneidenförmigen Auflagen 45, 46 zuerst aufgeschmolzen. Dadurch wird ein schnelles Schmelzen des thermoplastischen Materials sowohl an den Grundflächen 41, 42 des Spalts 40 als auch an den Ringflächen 51, 52 des ringförmigen Einsatzes 44 erreicht.

Ein zweites Ausführungsbeispiel geht aus Figur 3 hervor. Dort besteht der Einsatz 44 ebenfalls aus einem breiten Ringabschnitt 47 und einem schmalen Ringabschnitt 48. Zwischen den beiden Ringabschnitten 47, 48 verläuft die äußere Ringfläche 51 und die innere Ringfläche 52. In die Stirnseite des schmalen Ringabschnitts 48 ist eine V-förmige Einkerbung 54 eingebracht, so daß sich an der Stirnfläche des ringförmigen Einsatzes 44 zwei schneidenförmige Ringflächen 55 ausbilden. Die eine der schneidenförmigen Ringflächen 55 liegen auf der deckplattenseitigen Grundfläche 42 und die andere der schneidenförmigen Ringfläche auf der gehäuseseitigen Grundfläche 41 des schmalen Bereichs des Spaltes 40 auf. Zwischen den Ringflächen 51, 52 und der benachbarten Grundfläche im Spalt 40 ist ein Freiraum 58 ausgebildet. Dadurch kann das beim Ultraschallschweißen aufgeschmolzene Material in den Freiraum entweichen, und gelangt dadurch nicht als Aufwerfung an die Oberfläche des Gehäuses 11 bzw. der Deckplatte 15. Die Verschweißung zwischen Gehäuse 11, Deckplatte 15 und Einsatz 44 erfolgt an der unteren Stirnfläche des schmalen Ringabschnitts 48 im Bereich der schneidenförmigen Ringflächen 55.

Eine vereinfachte Ausführungsform des Ausführungsbeispiels gemäß Figur 3 ist in Figur 4 dargestellt. Dort ist der ringförmige Einsatz als kompakter Ring 60 ausgeführt. An der inneren Stirnfläche hat der Ring 60 ebenfalls eine V-förmige Einkerbung 54, die am inneren Umfang und am äußeren Umfang zwei schneidenförmige Ringflächen 61 ausbildet, von denen die eine auf der gehäuseseitigen Grundfläche 41 und die andere auf der deckplattenseitigen Grundfläche 42 aufsitzt. Die Schweißverbindung beim Ultraschallschweißen entsteht hierbei ebenfalls im Bereich der schneidenförmigen Ringflächen 55 zwischen Gehäuse 11, Deckplatte 15 und Einsatz 44.

Die Anwendung des Ultraschallschweißverfahrens ist jedoch nicht an die beschriebenen Ausführungen des Spaltes 40 und des Einsatzes 44 gebunden.

## Patentansprüche

1. Verfahren zur Herstellung einer druckdichten Baueinheit, insbesondere einer Hydraulikeinheit, mit einem Gehäuse (11), das eine Ausnehmung (13) zur Aufnahme einer Funktionseinheit (12) aufweist, mit einer Deckplatte (15) zum Verschließen der Ausnehmung (13) und mit einer druckdichten Verbindung zwischen Deckplatte (15) und Gehäuse (11), wobei zwischen der Deckplatte (15) und dem Gehäuse (11) ein umlaufender Spalt (40) ausgebildet ist, in den ein Einsatz (44) eingesetzt ist, mit dem die druckdichte Verbindung zwischen Gehäuse (11) und Deckplatte (15) ausgebildet ist, **dadurch gekennzeichnet, daß** auf den in den Spalt (40) zwischen dem Gehäuse (11) und der Deckplatte (15) eingesetzten Einsatz (44) eine Sonotrode (65) einer Ultraschallschweißanlage aufgesetzt wird und daß mittels Ultraschallschweißen der Einsatz (44) mit dem Gehäuse (11) und der Deckplatte (15) druckdicht verschweißt wird.

2. Verfahren nach Anspruch 1, **dadurch gekennzeichnet, daß** in dem Spalt (40) eine gehäuseseitige Grundfläche (41) und eine deckplattenseitige Grundfläche (42) ausgebildet wird und der Einsatz (44) mit je einer Auflagefläche (51, 52, 55, 61) auf der gehäuseseitigen Grundfläche (41) und auf der deckplattenseitigen Grundfläche (42) aufgesetzt in diesem Bereich die druckdichte Verbindung ausgebildet wird.

3. Verfahren nach Anspruch 2, **dadurch gekennzeichnet, daß** der Einsatz (44) an der inneren Ringfläche mit einer V-förmigen Einkerbung versehen wird, derart, daß an der Stirnfläche zwei schneidenförmige Ringflächen (55, 61) ausgebildet werden und die eine schneidenförmige Ringfläche mit der gehäuseseitigen Grundfläche (41) und die andere schneidenförmige Ringfläche mit der deckplattenseitigen Grundfläche (42) verbunden wird.

4. Verfahren nach Anspruch 2, **dadurch gekennzeichnet, daß** die gehäuseseitige Grundfläche (41) und die deckplattenseitige Grundfläche (42) jeweils geneigt verlaufend ausgebildet werden und jeweils eine schneidenförmige Auflage (45, 46) für den Einsatz (44) ausbilden.

5. Verfahren nach Anspruch 1, **dadurch gekennzeichnet, daß** an dem Einsatz (44) ein oberer, breiter Ringabschnitt (47) und ein unterer, schmaler Ringabschnitt (48) vorgesehen wird und in die Stirnfläche des schmalen Ringabschnitts (48) eine V-förmige Einkerbung (54) eingeformt wird.

6. Verfahren nach Anspruch 5, **dadurch gekennzeichnet, daß** im Spalt (40) unterhalb der zwischen dem breiten Ringabschnitt (47) und dem schmalen Ringabschnitt (48) ausgebildeten Ringflächen (51, 52) jeweils ein Freiraum (58) im unverbauten Zustand vorgesehen wird, in den das aufgeschmolzene Material beim Verschweißen entweichen kann.

## Claims

1. Process for producing a pressure-tight structural unit, in particular a hydraulic unit, having a housing (11), which includes a recess (13) for receiving a functional unit (12), having a cover plate (15) for closing off the recess (13) and having a pressure-tight connection between the cover plate (15) and housing (11), with an encircling gap (40) being formed between the cover plate (15) and the housing (11), into which gap is fitted an insert (44) which is used to form the pressure-tight connection between housing (11) and cover plate (15), **characterized in that** a sonotrode (65) of an ultrasonic welding installation is placed onto the insert (44), which has been inserted into the gap (40) between the housing (11) and the cover plate (15), and **in that** the insert (44) is welded in a pressure-tight manner to the housing (11) and the cover plate (15) by means of ultrasonic welding.

2. Process according to Claim 1, **characterized in that** a housing-side base surface (41) and a cover-plate-side base surface (42) are formed in the gap (40), and in each case one bearing surface (51, 52, 55, 61) of the insert (44) is placed onto the housing-side base surface (41) and onto the cover-plate-side base surface (42), and the pressure-tight connection is formed in this region.

3. Process according to Claim 2, **characterized in that** the insert (44) is provided, on the inner annular surface, with a V-shaped notch, in such a manner that two annular surfaces (55, 61) in the form of cutting edges are formed at the end face, and one annular surface in the form of a cutting edge is connected to the housing-side base surface (41) and the other annular surface in the form of a cutting edge is connected to the cover-plate-side base surface (42).

4. Process according to Claim 2, **characterized in that** the housing-side base surface (41) and the cover-plate-side base surface (42) are each designed to run at an inclination and each form a support (45, 46) in the form of a cutting edge for the insert (44).

5. Process according to Claim 1, **characterized in that** an upper, wide ring section (47) and a lower, narrow ring section (48) are provided at the insert (44), and a V-shaped notch (54) is formed into the end face of the narrow ring section (48).

6. Process according to Claim 5, **characterized in that** in the gap (40), in the unassembled state, a free space (58) is in each case provided below the annular surfaces (51, 52) formed between the wide ring section (47) and the narrow ring section (48), into which free space the melted material can escape during welding.

## Revendications

1. Procédé pour réaliser un groupe étanche à la pression, notamment un groupe hydraulique, comprenant un boîtier (11) ayant une cavité (13) pour recevoir un groupe fonctionnel (12),
une plaque de recouvrement (15) pour fermer la cavité (13) et
une liaison étanche à la pression entre la plaque de recouvrement (15) et le boîtier (11),
et un intervalle périphérique (40) est prévu entre la plaque de recouvrement (15) et le boîtier (11) recevant un insert (44) réalisant la liaison étanche à la pression entre le boîtier (11) et la plaque de recouvrement (15),
**caractérisé en ce qu'**
on applique une sonotrode (65) sur l'insert (44) placé dans l'intervalle (40) entre le boîtier (11) et la plaque de recouvrement (15), et,
par soudage aux ultrasons on soude de manière étanche à la pression l'insert (44) au boîtier (11) et à la plaque de recouvrement (15).

2. Procédé selon la revendication 1,
**caractérisé en ce qu'**
on réalise une surface de base (41) du côté du boîtier dans l'intervalle (40) et une surface de base (42) du côté de la plaque de recouvrement et on applique l'insert (44) avec chaque fois une surface d'appui (51, 52, 55, 61) sur la surface de base (41) du côté du boîtier et on l'applique sur la surface de base (42) du côté de la plaque de recouvrement, surface de base au niveau de laquelle on réalise la liaison étanche en pression.

3. Procédé selon la revendication 2,
**caractérisé en ce que**
l'insert (44) est muni d'encoches en forme de V au niveau de sa surface annulaire intérieure de façon à réaliser deux surfaces annulaires (55, 61) en forme de couteaux au niveau de la surface frontale, l'une des surfaces annulaires en forme de couteau étant reliée à la surface de base (41) du côté du boîtier et l'autre surface annulaire en forme de couteau étant reliée à la surface de base (42) du côté du plateau de recouvrement.

4. Procédé selon la revendication 2,
**caractérisé en ce qu'**
on réalise avec un profil chaque fois incliné la surface de base (41) du côté du boîtier et la surface de base (42) du côté de la plaque de recouvrement et on réalise un appui en forme de couteau (45, 46) pour chaque insert (44).

5. Procédé selon la revendication 1,
**caractérisé en ce que**
l'insert (44) comporte un segment annulaire large supérieur (47) et un segment annulaire étroit inférieur (48) et une encoche (54) en forme de V est réalisée dans la surface frontale du segment annulaire étroit (48).

6. Procédé selon la revendication 5,
**caractérisé par**
un espace libre (58) à l'état non encombré dans l'intervalle (40) sous les surfaces annulaires (51, 52) entre le segment annulaire large (47) et le segment annulaire étroit (48), espace libre par lequel peut s'échapper la matière fondue lors du soudage.
